# EUROPEAN PATENT SPECIFICATION

(11) **EP 2 155 349 B1**
(45) Date of publication and mention of the grant of the patent: **04.07.2012**
(21) Application number: 08762658.6
(22) Date of filing: 21.05.2008
(51) Int. Cl.: B01D 21/00, E04B 1/18, C02F 11/00

(54) **INTEGRATED PLANT AND METHOD FOR THE TREATMENT OF WASTE WATER**
INTEGRIERTE ANLAGE UND VERFAHREN ZUR BEHANDLUNG VON ABWASSER
INSTALLATION INTÉGRÉE ET PROCÉDÉ POUR LE TRAITEMENT DES EAUX USÉES

(30) Priority: 22.05.2007 HU 0700359
(43) Date of publication of application: 24.02.2010
(73) Proprietor: Töröcsik, Ferenc, 5000 Szolnok (HU)
(72) Inventor: PÉLYI, Róbert, H-5000 Szolnok (HU)
(74) Representative: Erdély, Péter
(86) International application number: PCT/HU2008/000055
(87) International publication number: WO 2008/142466

(56) References cited:
- DE-U1- 9 404 188
- JP-A- 1 099 698
- JP-A- 2003 335 594

## Description

The present invention relates to an integrated waste water purification plant comprising a biological unit arranged in a circular, complex structure, and provided with a crane and, in some cases, with a sludge scraper and footboard bridge. The present invention further relates to a method for the construction of the integrated waste water purification plant.

For the waste water purification works, mechanical pre-purification, biological treatment, sedimentation, disinfection, pumping of the rude or purified waste water, as well as sludge treatment (thickening, pressing, fermentation, compost formation) are mainly required.

The waste water purification plants adapted to perform such operations are therefore to be provided with reactor spaces for receiving and purifying waste water; with auxiliary equipments and pipelines for connecting said reactor spaces and for delivering the rude waste water, the purified waste water and the sludge; with tanks and additional equipments for storing and feeding the additives required for the purification; and with mechanical units for carrying out the method steps, such as a blower house, water separating engine house or the like. Furthermore, the plant should also be provided with an energy supply and control system and a social building as well.

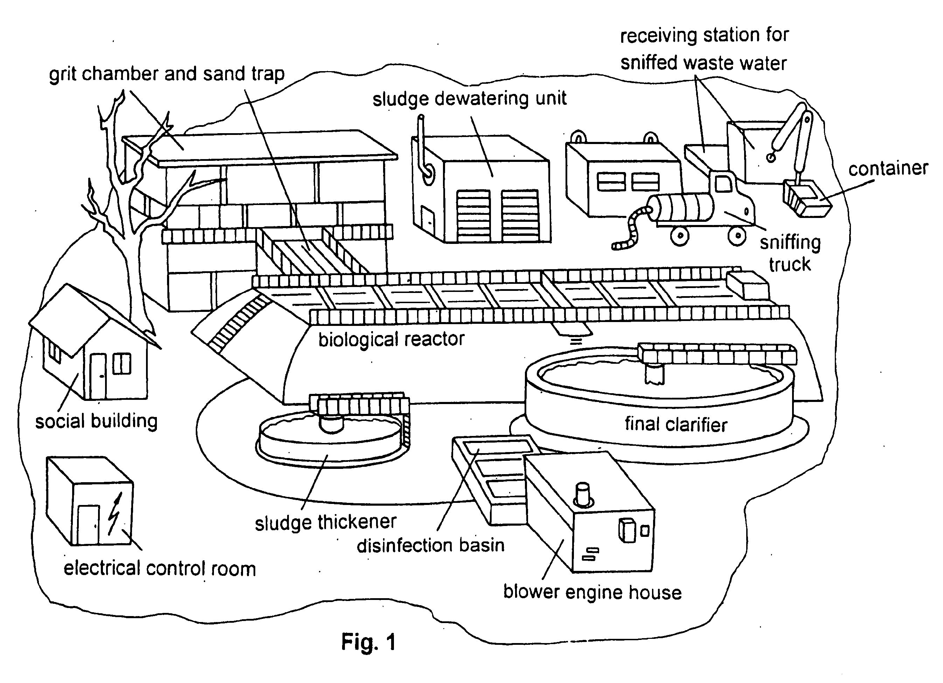

In the conventional waste water purification plants, the basins used for the various technological phases are installed in most cases as separate structures, which are connected by a pipeline system. The various storage tanks and mechanical devices are also provided as separate units, as shown in Fig. 1.

In order to achieve an increased economy in space and a higher cost-efficiency, several integrated plants have been developed. For example, HU 200574 discloses an arrangement wherein the technological structures are accommodated in a cylindrical body, wherein a plurality of cylindrical cells are concentrically arranged on a common circular base. This structure is also equipped with a rotating footboard bridge for the service works. This arrangement is economic in space and cost-efficient when compared to the conventional arrangements.

However, this arrangement, as well as all of the other prior art ones, has the drawback that loading in and out the devices accommodated in the technological basins and the service units, like pumps, thickeners, mixers etc. is difficult, and it is also difficult to take the sludge out. These operations can be carried out only by external means, e.g. by vehicle cranes. In order to enable the use of a crane, a service road is additionally to be built around the structure.

The object of the present invention is therefor to provide a complex integrated structure that keeps the advantageous features of the prior art, while meeting the requirements of the technology, as well as keeping the operational and maintenance conditions at a maximum level. A further object of the invention is to provide a structure and method, wherein, during installation, some units may be applied in a ready assembled form and may be used for building up the complex structure.

The invention is based on the recognition that by integrating all the architectural and mechanical units in a circular structure, and by providing this complex structure with a special rotary crane arranged on the top of the structure, the whole plant can be operated in a simple and economic way, and in addition, its installation also becomes easier.

The plant according to the invention is therefore formed in such a way that the clarifier and mechanical units are arranged in a common complex structure, the crane is a swing crane having a fixed hollow central column coaxial with the vertical geometrical axis of the complex structure, and further being provided with a support having wheels running on the structure and cable-strands for the electrical equipments of the complex structure accommodated in, and a control cabinet of the whole system mounted on said central column. The column may further comprise hydraulic, ventilation and other lines.

Preferably, the column, the control cabinet and the cable-strands constitute a single unit assembled in advance, in a workshop.

In cases, when the sedimentation space is an independent reactor arranged around the central axis of the multifunctional structure, the scraper bridge used for removing the deposited sludge and the footboard bridge integrally mounted thereto may be a part of the crane. By pivoting the crane together with the integrated bridge, it can serve the craning and scraping operations as a complex apparatus, wherein the scraper is fixed to the column of the crane by connections allowing angular motion. Due to the combination of angular and radial motion, the crane is capable of performing a lifting operation in any part of the complex structure. By means of such a crane moving in this polar coordinate space, a lifting or loading may be performed not only within the multifunctional complex structure, but a load may be put on the road running to the complex structure or onto a vehicle standing on that road.

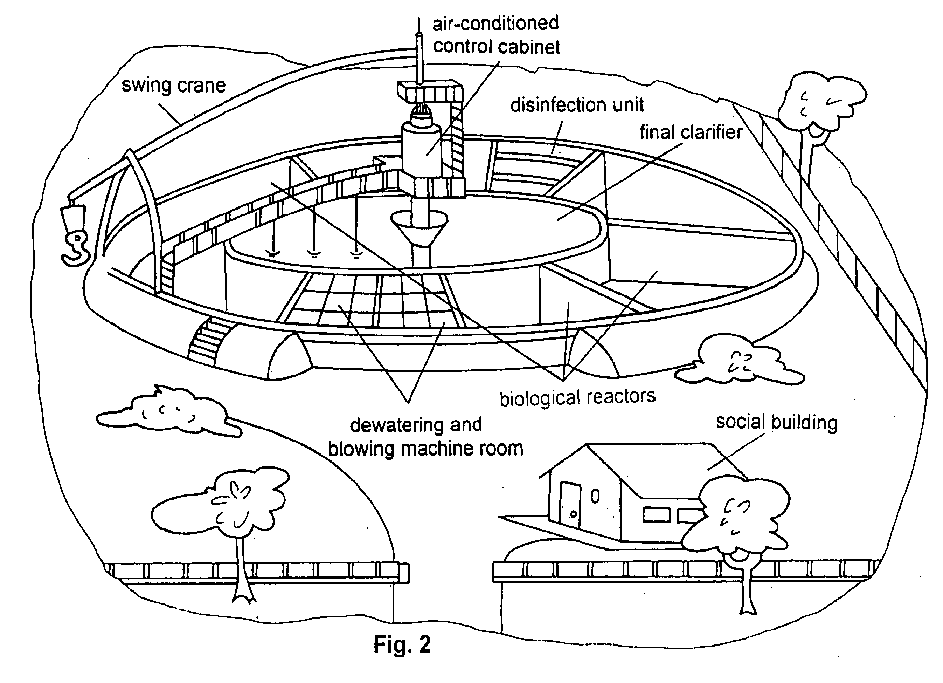

In the arrangement according to the invention, only the macro public utility connections for the integrated multifunctional complex structure should be provided, while outside the complex structure, only the dispatcher room and the social building for the operating stuff of the plant (and in certain cases, depositories, garages, etc. for providing the operational conditions in relation to the sewer system) should be provided (Fig. 2).

In view of the above, a public utility connection system for serving connections of reduced distance should only be provided at the multifunctional structure, said connection system allowing the use of pre-manufactured units, easy planning and easy implementation.

The method for construction of the plant comprises the steps of excavating a circular ground pit first, and, preparing a concrete base in the centre thereof, with anchor bolts for holding a column base, erecting an assembled column/control-cabinet/cable-strand unit on said base, arranging the electrical and hydraulic lines on the concrete base and covering them with a base body of reinforced concrete, mounting a swing crane track with a support provided with wheels on the column, and providing the support with temporary leg extensions so that the wheels at their ends run on the base body, and building the walls of the complex structure, removing the leg extensions of the support, and preparing the biological reactor, the clarifier and mechanical units inside the walls by means of the swing crane.

The invention will be described in more detail with reference to the accompanying drawings, in which:
- Figure 1: is a schematic view of a conventional arrangement,
- Figure 2: is a schematic view of the integrated waste water purification plant according to the present invention,
- Figure 3: shows a plan view of the waste water purification plant according to a first embodiment of the present invention,
- Figure 4: is a sectional view A-A of the embodiment shown in Figure 3,
- Figure 5: is a schematic view of the swing crane used in the plant according to the invention,
- Figure 6: is an axonometric view of the waste water purification plant according to a second embodiment of the invention,
- Figure 7: illustrates the first steps of the erecting work of the waste water purification plant according to the invention, and
- Figure 8: shows further steps of the construction work.

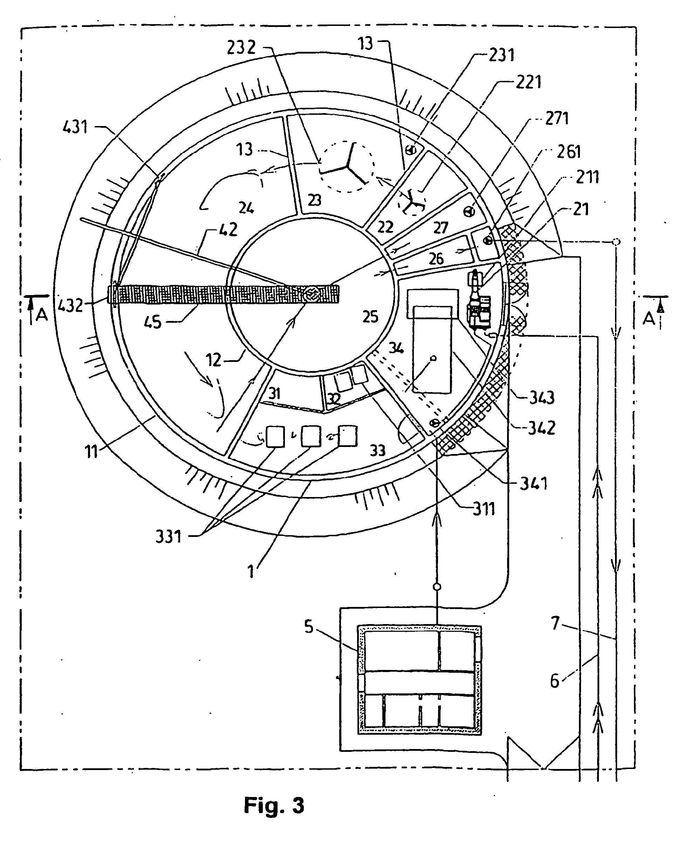

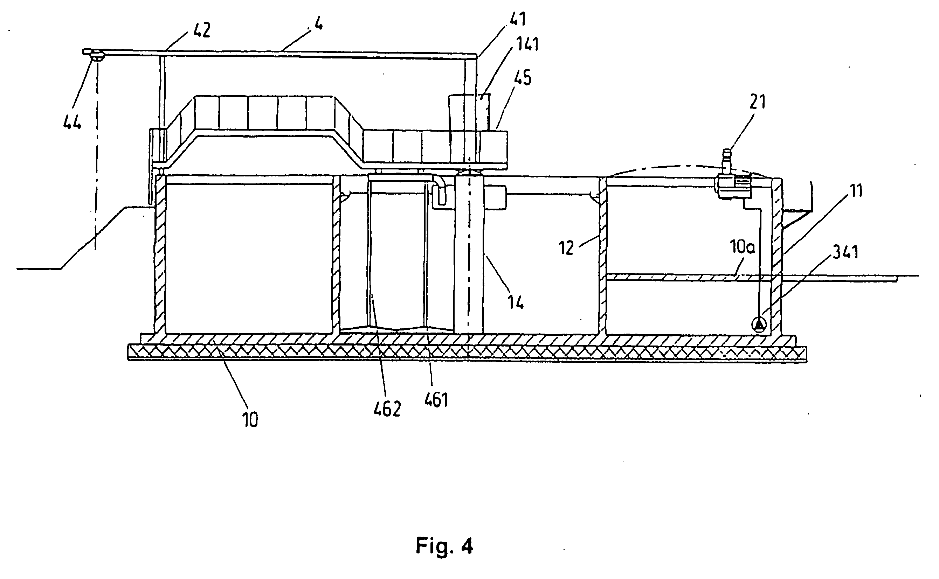

As shown in Figures 3 and 4, the complex structure 1 has a circular base body 10 preferably at least partly arranged below the ground level, an outer wall 11 and an inner wall 12. The column 14 used for holding the swing crane 4 is coaxial with the vertical geometrical axis of the base body 10. The ring shaped space 13 between the inner wall 12 and the outer wall 11 is divided into a plurality of chambers by intermediate walls 13. These chambers and the ring space within the inner wall 12 provide the functional spaces of the purification technology, as well as the basins and rooms for the storage, feeding and the mechanical units used for operating and servicing the plant.

The complex structure 1 comprises a sand trap 21, an anaerobic basin 22, an anoxic basin 23, a aeration basin 24, a final clarifier 25, a disinfection basin 26, a sludge thickening basin 27, storage basin(s) 31, feeding units 32, a blower room 33 and sludge dewatering unit 34.

In the drawings only a few functional units are illustrated, such as vertical axis-type mixer 221, waste water recirculation pump 231, vertical axis-type mixer 232, end pump 261, sludge recirculation pump 271, blowers 331, discharge pump 341 for escaped water, water separation 342, the dehydrated sludge storage container 343, grit chamber and sand trap 211 and reagent storage containers 311. The pipeline system connecting the units is not illustrated as it has no relevance in respect of the invention. The plant is further provided with an energy supply system and a control system, which are not illustrated either. The plant further comprises a pipeline 6 for the rude waste water, a pipeline 7 for the purified waste water and a social service room 5.

The municipal waste water arriving in the pipeline 6 of the rude waste water is directed into the anaerobic basin 22 through the sand trap 21 for mechanical cleaning, and then into the anoxic basins 23.

The thickened sludge is directed into the sludge separator 27, whereas the purified waste water is fed into the disinfection basin 26, from which it is fed through the pipeline 7 of the purified waste water into its location of end-use, or in certain cases, into a river. The escaped water of the sludge separator 27 is returned to the sludge thickening.

In cases where the waste water purification plant is also used for purification of sniffed waste water, this latter is directed to a storage basin of the complex structure 1 through a fine screen-type grit chamber, or in absence of such equipments, it is directed into the existing grit chamber 21.

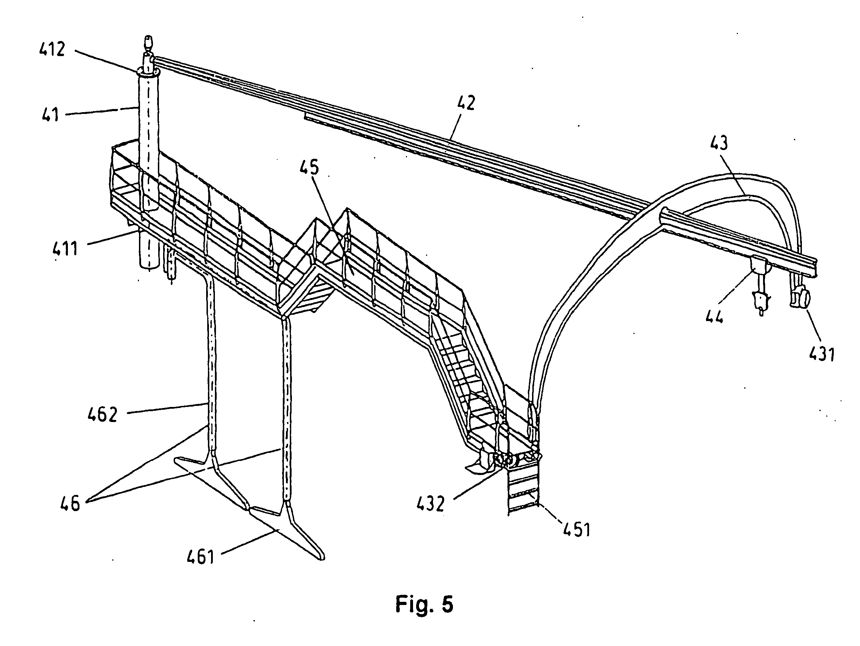

The main units of the swing crane 4 shown in Figure 5 include a shaft 41, a crane track 42, an A- shaped support 43 and a scraper bridge 45. The crane track 42 and the scraper bridge 45 of the swing crane 4 are pivotably mounted on the shaft 41 fixed to a hollow column 14 not shown in this figure. The scraper bridge 45 is connected to the shaft 41 by means of a central bearing 411, whereas the crane track 42 is connected to the shaft 41 by means of a crane bearing 412. The energy supply of the unit is provided via the power line 413. A known crane carriage 44 is arranged on the crane track.

The crane track 42 is fixed to the support 43 leaning on wheels 431 running along the outer wall 11 of the complex structure 1. The external end of the scraper bridge 25 is connected to the bear frame 43. By releasing this connection, the crane track 42 can be pivoted to the scraper bridge 45. The driven wheels are arranged under the scraper bridge 45. The scraper bridge 45 has one or more sludge receiving unit. The sludge receiving unit 46 preferably consists of a scraper member 461 having a scraper blade contacting the bottom surface, and a siphon tube 462.

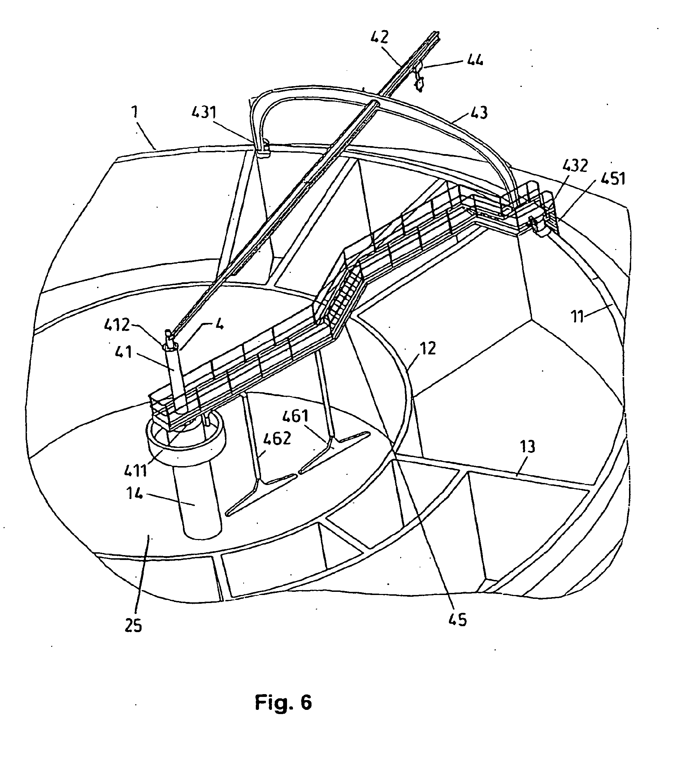

In Figure 6, a further embodiment of the waste water purification system according to the invention is illustrated in axonometric view. The reference numbers of this figure are the same as the ones shown in the preceding figures.

As shown in Figure 6, the crane track 42, and in this way the crane carriage 44 running thereon reach over the sedimentation basin 25, the external ringshaped space and project beyond the outer wall 11 of the complex structure 1 so that the crane is capable of lifting or lowering any load, machine or other devices from or to a location (ground or truck) adjacent to the complex structure.

The best utilisation of the crane is possible when an automatic load gripping and handling system is provided. In such a system so called lifting poles are used instead of lifting eyes on the objects to be lifted, and the lifting element of the crane is a so called lifting bell instead of a lifting hook. All the mechanical units of the complex structure 1 may simply be mounted or dismounted in this way during maintenance. The swing crane 4 may additionally be provided with a semi-automatic active hook/ bell that can be engaged with or disengaged from the lifting pole in response to pushing a push-button.

Thus, lifting may be carried out in locations, which are at inaccessible on the surface of the water. Otherwise such lifting could be performed only by human force, applying special frames and operator's platforms. Due to the use of polar coordinate sensors for the crane track (for sensing angular and radial motions), semi-automatic operation of the crane by using push-buttons is possible. (One or more full sludge container should be removed from the water separation engine house and should be replaced with an empty container everyday.) Due to this approach, an annual rate of materials handling of 100-10000 tons per year in a waste water purification plant can be reached.

For the vertical loading, lifting openings should be provided in some rooms. Such openings may be easily provided in the case of uncovered reactors, while a detachable roof or a detachable opening is needed in the case of engine houses and rooms with a covered ceiling structure. The openings and the coverings may be detached, lifted and handled by using the crane, too.

According to the invention, an optimal complex structure may be provided, involving each of the technological phases and technological functions of the waste water purification. The column 14 arranged in the centre of the structure has a further very important feature: an electrical control cabinet 141 can be mounted on its section projecting above the complex structure, preferably having multiple doors and arranged to allow walking around it.

The electrical control cabinet 141 is fixed on the column 14 and the operating buttons and electrical units are arranged on the inner walls of the cabinet doors and on switch boards preferably in a way that they are in the direction of the corresponding devices belonging to the given operating buttons and electrical units. The cabinet 141 contains all of the electrical components of the electrical apparatuses (e.g. frequency converter, PLC, circuit breaker, magnetic switch, thermal release, etc.) of the complex structure 1, as well as other connections e.g. to the dispatcher room or the social building. Thus, a complex central force transmission and data transmission cabinet powered directly by the electric power supply is provided. Due to the central location of the control cabinet 141, an optimal lengths of the electric network connections may be achieved. Cable-strands 142 drawn into the hollow column in advance, are led out from the cabinet to the electric operating units preferably in protective pipes, extending vertically downwards inside the column 14. The cable-strands are led downwards to the base of the structure (i.e. to the mirror layer of the ground pit), then they take the radial distance until the corresponding unit or device. Thereafter they are led to the connection points of the electrical units by turning upwards. Any cable of the cable-strand may be pulled out or drawn back either independently of or together with other ones.

The cable-strands are led preferably in plastic protective hoses applied without junctions. The pipes in the column may be armoured additionally by steel pipes. Applying armouring by steel pipes is also preferable at locations where the cables turn from the horizontal direction into the vertical direction at the base layer of the structure to reach the final connection point. The steel armouring is used to preserve the correct shape of the pipes and to avoid damages thereof. This type of control cabinet, the cable system built in the column and its extension without junction allow manufacturing the column and the electrical cabinet mounted thereto under workshop conditions, and to be delivered to installation site on a transport vehicle, together with a cable-strands also manufactured, tested and cut to the required length in workshop conditions.

One of the basic advantages of the invention is the extension of the utilization range of the crane with the possibility to use it during build up of the complex structure with *the* method according to the invention.

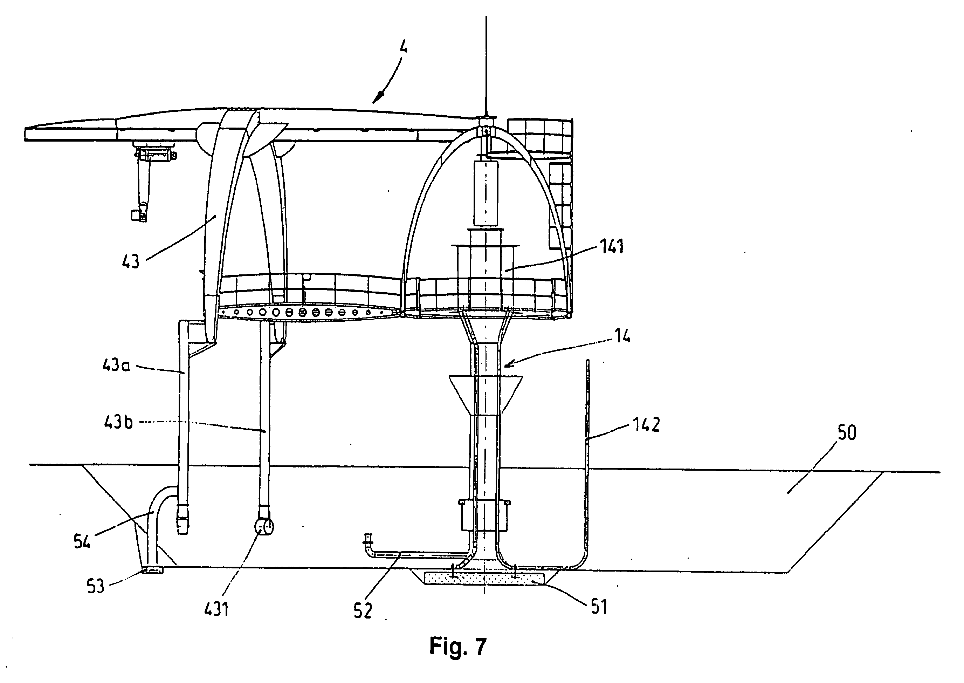

The method according to the invention comprises as a first step preparing a ground pit 50 shown in Figure 7. Next, a concrete base 51 with reinforced anchor bolts for supporting the column is produced in the centre of the ground pit. The column 14, the control cabinet 141 and the cable-strands 142, all assembled to one single unit in advance can be erected then, on the concrete base 51. During the construction process of the complex structure, the column 14 and the crane 4 are continuously used to help the construction work of the complex structure.

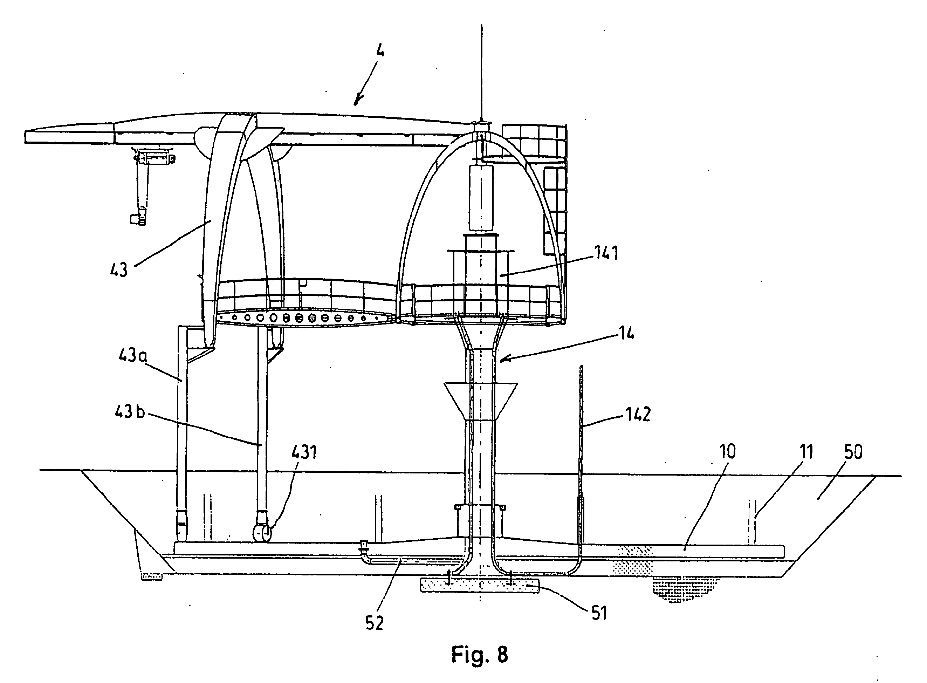

After the column 14 has been mounted, the cable-strands 142 accommodated in protective pipes are laid down, and hydraulic connections (e.g. with the sludge recirculation pipe connection 52) may be established. When the hydraulic and the electrical connections are ready, the bedding layer and the concrete building layer for a base body 10 may be prepared (Figure 8). Preferably, the base body 10 projects beyond the vertical outer walls 11, thus allowing to use the crane track mounted to the column 14 during the construction and mounting process of the complex structure. To this end, branches of the support 43 are temporarily provided with leg extensions 43a and 43b to which the wheels 431 are mounted. Until the base body 10 is finished, the crane 4 is kept in balance by means of a temporary support 54 fixed on a concrete block 53 (Figure 7).

The crane may be used from the beginning of the construction works, among others for making the reinforcement, lifting and stacking of concrete formworks, reinforcing steels and other constructional elements, cradling and mounting of engines etc, which allows to avoid the need of a crane truck or a tower crane to be on the site.

The pre-fabricated column 14 is also adapted to receive the lightning guard, the lighting installation and the video surveillance system in a ready-to-use state as a part of a transportable unit having been transported to the site.

At least a part of the protective pipes may serve other functions, like conveying fresh air from a distant field location (preferably, from the balks of the social building) to the control cabinet 141 in order to provide an overpressure of air inside the cabinet and thus to prevent the valuable electrical components from corrosion by completely separating them from the corrosive vapour. The electrical equipments of the swing crane 4 and the scraper bridge 45 occasionally mounted thereto may also be supplied with electric power through rotary connection.

The base of the complex structure 1 (Figure 4) is prepared below the ground level, preferably at least to an extent of 50%, however, some units, like the blower and the water separation unit, are arranged i preferably at a level close to the ground level. Therefore, an intermediate floor 10a (Figure 4) is provided for several rooms or chambers above the base body 10. Such chambers can receive escaped water coming from the waste water treatment technology, the sniffed waste water and even the rude waste water arriving through the sewage system in case of preferred installation conditions. These chambers also can function as pumping pits.

The invention increases the level of integration of the waste water purification plant, as it is not necessary to install separate units, a separate end-pump, a separate blower etc. and to provide a network of roads for accessing them. There is no need of settling a number of technological pipe connections, pipelines and electric cables, as these are provided in prefabricated simple form.

It is to be understood that the embodiments above are described only for the purpose of illustration and many alternative solutions can be carried out by one skilled in the art within the scope of the invention defined by the appended claims.

## Claims

1. Integrated waste water purification plant, comprising a biological reactor arranged in a circular structure, and further comprising clarifier and mechanical units, and service facilities, like social rooms and dispatcher room, the plant being provided with a crane and, occasionally, with sludge scraper and footboard bridge, **characterized in that**
• both the clarifier and the mechanical units are arranged in said circular structure, forming in this way a common complex structure (1),
• the crane is a swing crane (4) having a fixed hollow central column (14) coaxial with the vertical geometrical axis of the complex structure (1), and further being provided with a support (43) having wheels (431) running on the structure and
• cable-strands (142) for the electrical equipments of the complex structure (1) accommodated in, and a control cabinet (141) of the whole system mounted on said central column (14).

2. The integrated waste water purification plant of claim 1, **characterized in that** the column (14) further comprises therein hydraulic, ventilation and other lines.

3. The integrated waste water purification plant of claim 2, **characterized in that** at least a part of the cable-strands (142) and of the other lines is arranged in protective pipes.

4. The integrated waste water purification plant of any one of claims 1 to 3, **characterized in that** the cable-strands (142) are adapted to be pulled out of and drawn back into the column (14).

5. The integrated waste water purification plant of any one of claims 1 to 4, **characterized in that** the column (14), the control cabinet (141) and the cable-strands (142) constitute a single unit assembled in advance, in a workshop.

6. The integrated waste water purification plant of any one of claims 1 to 5, **characterized in that** some rooms of the complex structure (1) are provided with removable or slidable cover.

7. The integrated waste water purification plant of any one of claims 1 to 6, **characterized in that** the support (43) of the swing crane (4) is of an A-shape, and the wheels (431) are running along the peripheral edge of the complex structure (1).

8. The integrated waste water purification plant of any one of claims 1 to 7, **characterized in that** the swing crane (4) has automatic or semi-automatic hook(s), whereas at least some of the objects to be lifted are provided with lifting pole.

9. The integrated waste water purification plant of any one of claims 1 to 8, **characterized in that** the plant further comprises an scraper bridge that can be pivoted to the crane track (42).

10. The integrated waste water purification plant of any one of claims 1 to 9, **characterized in that** the complex structure (1) comprise chambers arranged above the base body (10), on an intermediate floor (10a) near to the ground level.

11. A method for construction of a plant of any one of claims 1 to 10, the method comprising the steps of building a biological unit, clarifier and mechanical units, **characterized in that** the method further comprises the steps of:
• excavating a circular ground pit first, and, preparing a concrete base in the centre thereof, with anchor bolts for holding a column base,
• erecting an assembled column/control-cabinet/cable-strand unit on said base,
• arranging the electrical and hydraulic lines on the concrete base and covering them with a base body of reinforced concrete,
• mounting a swing crane track with a support provided with wheels on the column, and providing the support with temporary leg extensions so that the wheels at their ends run on the base body, and
• building the walls of the complex structure, removing the leg extensions of the support, and preparing the biological reactor, the clarifier and mechanical units inside the walls by means of the swing crane.

12. The method of claim 11, **characterized in that** the reinforced concrete base body is prepared to project beyond the circumference of the complex structure.

13. The method of claim 11 or 12, **characterized in that** 40-60% of the height of the complex structure is below the ground level.

## Patentansprüche

1. Integrierte Abwasserkläranlage mit einem biologischen Reaktor, der in einem kreisförmigen Bauwerk angeordnet ist, weiterhin mit einem Absetzer, mechanischen Einrichtungen und Bedienungsanlagen, wie sozialen Räumlichkeiten und einem Dispatcherraum, wobei die Kläranlage mit einem Kran, und, gegebenenfalls, mit einer Räumerbrücke und einer Gehwegbrücke versehen ist, **dadurch gekennzeichnet, dass**
- sowohl der Absetzer als auch die mechanischen Einrichtungen in dem kreisförmigen Bauwerk angeordnet sind, und in dieser Weise ein gemeinsames komplexes Bauwerk (1) bilden,
- der Kran als ein Schwenkkran (4) ausgebildet ist, der eine feststehende hohle zentrale Säule (14) aufweist, die koaxial mit der vertikalen geometrischen Achse des komplexen Bauwerkes (1) angeordnet ist, und der Kran weiterhin mit einem Stützrahmen (43) versehen ist, der Stützräder (431) aufweist, die auf dem Bauwerk rollen und
- Kabelbünde (142) für die elektrischen Ausrüstungen des komplexen Bauwerkes (1) innerhalb der zentralen Säule (14) angeordnet sind, und ein elektrischer Schaltschrank (141) des gesamten Systems an der zentralen Säule (14) angebracht ist.

2. Integrierte Abwasserkläranlage nach Anspruch 1, **dadurch gekennzeichnet, dass** die Säule (14) innen auch noch hydraulische, Lüftungs- und andere Leitungen enthält.

3. Integrierte Abwasserkläranlage nach Anspruch 2, **dadurch gekennzeichnet, dass** wenigstens ein Teil der Kabelbünde (142) und der anderen Leitungen in Schutzrohren angeordnet ist.

4. Integrierte Abwasserkläranlage nach einem der Ansprüche 1 bis 3, **dadurch gekennzeichnet, dass** die Kabelbünde (142) aus der Säule (14) ausziehbar und in diese wieder einfädelbar sind.

5. Integrierte Abwasserkläranlage nach einem der Ansprüche 1 bis 4, **dadurch gekennzeichnet, dass** die Säule (14), der Schaltschrank (141) und die Kabelbünde (142) eine einzige, in einer Werkstatt im voraus zusammengebaute Einheit bilden.

6. Integrierte Abwasserkläranlage nach einem der Ansprüche 1 bis 5, **dadurch gekennzeichnet, dass** manche Räume des komplexen Bauwerkes (1) mit einem entfernbaren oder verschiebbaren Deckel versehen sind.

7. Integrierte Abwasserkläranlage nach einem der Ansprüche 1 bis 6, **dadurch gekennzeichnet, dass** der Stützrahmen (43) des Schwenkkranes (4) A-förmig ist und seine Stützräder (431) entlang des Umfangrandes des komplexen Bauwerkes (1) abrollen.

8. Integrierte Abwasserkläranlage nach einem der Ansprüche 1 bis 7, **dadurch gekennzeichnet, dass** der Schwenkkran (4) einen oder mehrere automatische oder halbautomatische Haken aufweist, wobei wenigstens einige der anzuhebenden Gegenstände mit einem Hebemast versehen sind.

9. Integrierte Abwasserkläranlage nach einem der Ansprüche 1 bis 8, **dadurch gekennzeichnet, dass** die Anlage weiterhin eine Räumerbrücke aufweist, die zur Kranbahn verschwenkbar ist.

10. Integrierte Abwasserkläranlage nach einem der Ansprüche 1 bis 9, **dadurch gekennzeichnet, dass** das komplexe Bauwerk (1) Kammern aufweist, die oberhalb des Grundkörpers (10), auf einer Zwischendecke (10a) in der Nähe des Terrainniveaus angeordnet sind.

11. Verfahren zum Ausbau einer Anlage nach einem der Ansprüche 1 bis 10, wobei das Verfahren die Schritte des Anlegens eines biologischen Reaktors, eines Absetzers und mechanischer Einrichtungen enthält, **dadurch gekennzeichnet, dass** das Verfahren weiterhin die folgenden Schritte aufweist:
- zuerst Ausbildung einer kreisförmigen Erdgrube, dann Anfertigung einer Betongründung in deren Mitte, mit Ankerschrauben für die Festhaltung einer Säulenschwelle,
- Aufstellen einer aus Säule/Schaltschrank/Kabelbünde zusammengestellten Einheit auf der Säulenschwelle,
- Anordnen von elektrischen und hydraulischen Leitungen auf der Betongründung und deren Bedeckung mit einem Grundkörper aus Stahlbeton,
- Anbau einer mit einem Stützrahmen versehenen Kranbahn für den Schwenkkran an der Säule, wobei der Stützrahmen Stützräder aufweist, und Ausrüstung des Stützrahmens mit provisorischen Fußverlängerungen, damit die Stützräder an deren Enden auf dem Grundkörper abrollen können, und
- Aufbau der Wände des komplexen Bauwerkes, Entfernen der Fußverlängerungen des Stützrahmens und Fertigstellen des biologischen Reaktors, des Absetzers und der mechanischen Einrichtungen innerhalb der Wände mit Hilfe des Schwenkkranes.

12. Verfahren nach Anspruch 11, **dadurch gekennzeichnet, dass** der aus Stahlbeton gefertigte Grundkörper ist so ausgebildet, damit er sich über den Umfang des komplexen Bauwerkes hinaus erstreckt.

13. Verfahren nach Anspruch 11 oder 12, **dadurch gekennzeichnet, dass** 40 bis 60% der Höhe des komplexen Bauwerkes sich unterhalb des Terrainniveaus befindet.

## Revendications

1. Installation intégrée pour épuration des eaux usées comprenant un réacteur biologique arrangé dans un ouvrage circulaire, comprenant en plus un clarificateur, des dispositifs mécaniques et des facilités de service, comme des locaux sociaux et une salle de dispatcher, l'installation étant pourvue d'une grue et, éventuellement, d'un pont de raclage de fond et de circulation, **caractérisée en ce que**
- tant le clarificateur que les dispositifs mécaniques sont arrangés dans l'ouvrage circulaire constituant ainsi un ouvrage commun complexe (1),
- la grue est une grue pivotante (4) ayant un fût de colonne central creux fixé étant coaxial par rapport à l'axe géométrique vertical de l'ouvrage complexe (1), et en plus elle est pourvue d'un support (43) avec des roues de support (431) roulant sur l'ouvrage et
- des groupes de câble (142) éléctriques pour les équipements éléctriques de l'ouvrage complexe (1) sont logés dans le fût de colonne central (14) et une boîte de distribution éléctrique (141) du système complet est arrangée sur le fût de colonne central (14).

2. Installation intégrée pour épuration des eaux usées selon la revendication 1, **caractérisée en ce que** dans le fût de colonne central (14) sont logés aussi des conduits hydrauliques, de ventilation et d'autres.

3. Installation intégrée pour épuration des eaux usées selon la revendication 2, **caractérisée en ce que** les groupes de câble (142) et au moins une part des autres conduits sont logés dans un tube protecteur.

4. Installation intégrée pour épuration des eaux usées selon une des revendications 1 à 3, **caractérisée en ce que** les groupes de câble (142) sont adaptés à être retirés de et à être enfilés dans le fût de colonne central (14).

5. Installation intégrée pour épuration des eaux usées selon une des revendications 1 à 4, **caractérisée en ce que** le fût de colonne central (14) avec la boîte de distribution éléctrique (141) et les groupes de câble (142) constituent une seule unité assemblée à l'avance dans un atelier.

6. Installation intégrée pour épuration des eaux usées selon une des revendications 1 à 5, **caractérisée en ce que** certaines parts de l'ouvrage complexe (1) sont recouvertes d'une couverture amovible ou coulissante.

7. Installation intégrée pour épuration des eaux usées selon une des revendications 1 à 6, **caractérisée en ce que** le support (43) de la grue pivotante (4) à la forme d'une lettre A et les roues (431) pouvant rouler le long de la périphérie de l'ouvrage complexe (1).

8. Installation intégrée pour épuration des eaux usées selon une des revendications 1 à 7, **caractérisée en ce que** la grue pivotante (4) a un ou plusieurs crochets automatiques ou semi-automatiques, et au moins une part des objets à lever est pourvue d'un mât élévateur.

9. Installation intégrée pour épuration des eaux usées selon une des revendications 1 à 8, **caractérisée en ce qu'** elle comprend un pont de raclage de fond (45) pouvant être pivoté au chemin de grue (42).

10. Installation intégrée pour épuration des eaux usées selon une des revendications 1 à 9, **caractérisée en ce que** l'ouvrage complexe (1) comprend des chambres arrangées au-dessus du semelle (10), sur un plancher intermédiaire (10a) au près du niveau de terrain.

11. Méthode pour la construction d'une installation selon l'une des revendications 1 à 10, la méthode comprenant les étapes de construction d'un réacteur biologique, d'un clarificateur et des dispositifs mécaniques, **caractérisée en ce que** la méthode comprend en plus les étapes suivantes:
- d'abord excavation d'une fosse circulaire dans la terre et puis préparation d'une fondation de béton avec des boulons d'ancrage dans le centre de cette fosse pour maintenir une semelle du fût de colonne,
- érection d'une unité de fût de colonne/boîte de distribution éléctrique/groupes de câble sur cette semelle,
- arrangement des conduits éléctriques et hydrauliques sur la fondation de béton et dont découvrement avec un corps de base en béton armé,
- montage d'un chemin de grue avec un support sur le fût de colonne en pourvenant le support avec des extensions de pieds provisoires pour que les roues de support sur les extrémités de ces extensions de pieds puisse rouler sur le corps de base, et puis
- construction des parois de l'ouvrage complexe, enlèvement des extensions de pieds du support et préparation du réacteur biologique, du clarificateur et des dispositifs mécaniques a l'intérieur des parois à l'aide de la grue pivotante.

12. Méthode selon la revendication 11, **caractérisée en ce que** le corps de base en béton armé est formé à la manière qu'il s'étend au-delà de la périphérie de l'ouvrage complexe.

13. Méthode selon la revendication 11 ou 12, **caractérisée en ce que** 40-60% de la hauteur de l'ouvrage complexe est au-dessous du niveau de terrain.
